# EUROPÄISCHE PATENTSCHRIFT

(11) **EP 3 401 702 B1**
(45) Veröffentlichungstag und Bekanntmachung des Hinweises auf die Patenterteilung: **14.10.2020**
(21) Anmeldenummer: 17170311.9
(22) Anmeldetag: 10.05.2017
(51) Int. Cl.: G01S 17/42, G01S 17/93, G01S 13/74, G01S 13/86, G01S 13/93, G01S 13/931, G01S 17/931

(54) **SENSORSYSTEM**
SENSOR SYSTEM
SYSTÈME DE CAPTEUR

(43) Veröffentlichungstag der Anmeldung: 14.11.2018
(73) Patentinhaber: Leuze electronic GmbH + Co. KG, 73277 Owen/Teck (DE)
(72) Erfinder: Feller, Bernhard, 86316 Friedberg (DE); Mohr Dr., Stefan, 80686 München (DE)
(74) Vertreter: Ruckh, Rainer Gerhard

(56) Entgegenhaltungen:
- JP-A- 2003 269 914
- US-A1- 2009 062 974
- US-A1- 2014 236 414
- US-B1- 9 221 396

## Beschreibung

Die Erfindung betrifft ein Sensorsystem für eine Anordnung von fahrerlosen Transportfahrzeugen.

Fahrerlose Transportfahrzeuge werden in automatisierten Fertigungsanlagen oder Anlagen im Bereich der Förder- und Lagertechnik zum Transport von Gütern eingesetzt. Derartige fahrerlose Transportfahrzeuge fahren selbsttätig vorgegebene Stationen an, beispielsweise zur Be- und Entladung von Gütern. Ein Problem bei derartigen Anlagen besteht darin, dass typischerweise mehrere fahrerlose Transportfahrzeuge gleichzeitig im Einsatz sind. Dann müssen z.B. mehrere fahrerlose Transportfahrzeuge in Kolonnen hintereinander bestimmte Ziele anfahren. Durch eine nicht angepasste Geschwindigkeit besteht dann die Gefahr, dass ein fahrerloses Transportfahrzeug auf das vorausfahrende fahrerlose Transportfahrzeug aufläuft.

Um in diesem Fall Beschädigungen der fahrerlosen Transportfahrzeuge zu vermeiden, ist es bekannt, an den Frontseiten und/oder Rückseiten der fahrerlosen Transportfahrzeuge Bumper als mechanische Schutzeinrichtungen vorzusehen.

Zwar wird mit den Bumpern eine Schutzwirkung erzielt, jedoch kann nicht vermieden werden, dass es durch das Auffahren eines fahrerlosen Transportfahrzeugs auf ein vorausfahrendes fahrerloses Transportfahrzeug zu einem Stillstand der fahrerlosen Transportfahrzeuge in der Kolonne kommt. Bei einem solchen Stillstand muss eine Bedienperson die Anlage betreten und die fahrerlosen Transportfahrzeuge neu starten. Mit einem solchen Kolonnenstillstand sind daher erhebliche Ausfallzeiten verbunden, die die Produktivität der gesamten Anlage erheblich reduzieren.

Die JP 2003-269914 A betrifft eine Sensoranordnung zur Steuerung von autonom fahrenden Fahrzeugen. Jedes Fahrzeug weist im Heckbereich eine Markierung in Form von selbstleuchtenden Etiketten und im Frontbereich einen Sensor mit einer Kamera auf. Die Kamera eines Fahrzeugs erfasst die Markierung des vorausfahrenden Fahrzeugs, wodurch das vorausfahrende Fahrzeug identifiziert wird. Anhand der Größe der auf der Kamera abgebildeten Markierung kann die Distanz zwischen den Fahrzeugen abgeschätzt werden.

Die US 2009/0062974 A1 betrifft ein autonomes mobiles Robotersystem. Um die Distanz zu einem zugeordneten Roboter zu bestimmen, ist auf einem ersten Roboter ein Distanzsensor vorgesehen. Mit diesem kann auch eine Objektidentifikation erfolgen.

Die US 2014/0236414 A1 betrifft ein autonomes Fahrzeug. Um ein autonomes Fahren zu ermöglichen sind auf dem Fahrzeug unterschiedliche Sensoren, wie zum Beispiel Radar- und Lindar-Sensoren sowie GPS-Systeme angeordnet. Anhand der Signale der Sensoren wird eine sichere Fahrtroute des Fahrzeugs bestimmt.

Die US 9,221,396 B1 (D4) betrifft ein autonomes Fahrzeug auf welchem Sensoren in Form von Lasersensoren, Kameras oder Radar-Sensoren angeordnet sind. Diese Sensoren bestimmen Distanzen zu Objekten in der Umgebung.

Der Erfindung liegt die Aufgabe zugrunde, ein Sensorsystem bereitzustellen, mittels dessen eine effektive Steuerung einer Mehrfachanordnung von fahrerlosen Transportfahrzeugen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Sensorsystem für eine Anordnung von fahrerlosen Transportfahrzeugen. Jedes fahrerlose Transportfahrzeug weist an seiner Rückseite eine diese kennzeichnende Kennzeichnung auf. Jedes fahrerlose Transportfahrzeug weist an seiner Frontseite Sensormittel auf, welche ausgebildet sind, die Kennzeichnung und den Abstand eines vorausfahrenden fahrerlosen Transportfahrzeugs zu ermitteln. In einer Auswerteeinheit werden von den Sensormitteln generierte Sensorsignale ausgewertet, mittels derer die Geschwindigkeit des fahrerlosen Transportfahrzeugs gesteuert wird. Die Kennzeichnung und der Abstand des vorausfahrenden fahrerlosen Transportfahrzeugs sind mit denselben Sensormitteln erfasst. Die Sensormittel sind von einem optischen Sensor gebildet. Der optische Sensor ist für eine Schutzfeldüberwachung ausgebildet.

Mit den Sensormitteln, die in jedem fahrerlosen Transportfahrzeug vorhanden sind, kann eine lokale Steuerung der fahrerlosen Transportfahrzeuge derart durchgeführt werden, dass das Fahrverhalten der fahrerlosen Transportfahrzeuge so aufeinander abgestimmt ist, dass ein Auffahren eines fahrerlosen Transportfahrzeug auf ein vorausfahrendes fahrerloses Transportfahrzeug vermieden wird, sodass dadurch bedingte Stillstände der fahrerlosen Transportfahrzeuge vermieden werden. Damit werden manuelle Eingriffe des Bedienpersonals zum Neustart der fahrerlosen Transportfahrzeuge weitgehend vermieden, wodurch Stillstandzeiten, die die Produktivität der gesamten Anlage beeinträchtigen, reduziert werden.

Ein wesentlicher Aspekt der Erfindung besteht darin, dass mit den Sensormitteln an der Frontseite eines fahrerlosen Transportfahrzeugs nicht nur der Abstand zu einem vorausfahrenden fahrerlosen Transportfahrzeugs erfasst wird. Vielmehr wird mit den Sensormitteln auch die Kennzeichnung des vorausfahrenden fahrerlosen Transportfahrzeugs erkannt, wodurch dieses von anderen, insbesondere stationären Gegenständen, unterschieden werden kann. Die Kennzeichnung kann dabei eine einfache Struktur aufweisen, da anhand dieser die fahrerlosen Transportfahrzeuge nicht einzeln identifiziert und voneinander unterschieden werden müssen. Vielmehr muss anhand der Kennzeichnung das fahrerlose Transportfahrzeug nur als Fahrzeug erkannt und zu anderen Objekten, die keine Fahrzeuge sind, unterschieden werden.

Durch die Erfassung der Kennzeichnung kann somit ein vorausfahrendes fahrerloses Transportfahrzeug als solches identifiziert werden, sodass dann anhand der ermittelten Abstände die Fahrt des fahrerlosen Transportfahrzeugs an das vorausfahrende fahrerlose Transportfahrzeug insbesondere derart angepasst wird, dass der Abstand zu diesem kontrolliert wird. Hierzu wird die Geschwindigkeit des fahrerlosen Transportfahrzeugs an die Geschwindigkeit des vorausfahrenden fahrerlosen Transportfahrzeugs angepasst, sodass beide fahrerlose Transportfahrzeuge in einer Kolonne hintereinander fahren können, ohne dass das fahrerlose Transportfahrzeug auf das vorausfahrende fahrerlose Transportfahrzeug auffährt.

Diese Anpassung der Fahrt eines fahrerlosen Transportfahrzeugs an das vorausfahrende fahrerlose Transportfahrzeug kann auf mehrere fahrerlose Transportfahrzeuge erweitert werden, sodass diese kollisionsfrei in Kolonnen fahren, ohne dass hierzu eine aufwändige zentrale Steuerung erforderlich ist. Erfindungsgemäß werden die Kennzeichnungen und der Abstand des vorausfahrenden fahrerlosen Transportfahrzeugs mit denselben Sensormitteln erfasst.

Da somit das Sensormittel eine Doppelfunktion erfüllt, wird ein besonders kompaktes Sensorsystem erhalten.

Dabei sind die Sensormittel von einem optischen Sensor gebildet.

Der optische Sensor kann dabei prinzipiell von einem Kamerasensor gebildet sein, mit dem auch Entfernungsmessungen durchgeführt werden können. Besonders vorteilhaft sind die Sensormittel von einem Flächendistanzsensor gebildet.

Ein Flächendistanzsensor bildet generell einen scannenden Distanzsensor, wobei vom Distanzsensor emittierte Lichtstrahlen periodisch innerhalb eines vorzugsweise flächigen Überwachungsbereich geführt sind, sodass mit dem Flächendistanzsensor innerhalb des Überwachungsbereichs die Positionen von Objekten bestimmt werden können. Durch die Ablenkbewegung der Lichtstrahlen können auch flächige Kennzeichnungen in ihrer Gesamtheit sicher vom Flächendistanzsensor erkannt und daher eindeutig identifiziert werden. Dabei sind beispielsweise die Kennzeichnungen von Konturmerkmalen des fahrerlosen Transportfahrzeugs von Kontrastmustern oder von Reflektoren gebildet.

Die Funktionalität des optischen Sensors ist weiter noch dadurch erhöht, dass mit diesem zusätzlich eine Schutzfeldüberwachung durchgeführt wird. Damit kann der optische Sensor insbesondere in sicherheitstechnischen Applikationen eingesetzt werden. Mit dem optischen Sensor wird dann innerhalb eines vorgegebenen Schutzfelds überwacht, ob dort ein sicherheitskritisches Objekt wie zum Beispiel eine Person eindringt. Ist dies der Fall, generiert der optische Sensor ein sicherheitsrelevantes Signal, welches zu einem Notstopp des fahrerlosen Transportfahrzeugs führt, sodass Gefährdungen von Personen vermieden werden.

Die Erfindung wird im Folgenden anhand der Zeichnung 5 erläutert. Es zeigen:
- Figur 1:: Erstes Beispiel eines Sensorsystems.
- Figur 2:: Zweites Beispiel eines Sensorsystems.
- Figur 3:: Erste Ausführungsform eines Flächendistanzsensors für das Sensorsystem gemäß Figur 2.
- Figur 4:: Zweite Ausführungsform eines Flächendistanzsensors für das Sensorsystem gemäß Figur 2.
- Figur 5:: Ausführungsbeispiel des erfindungsgemäßen Sensorsystems.

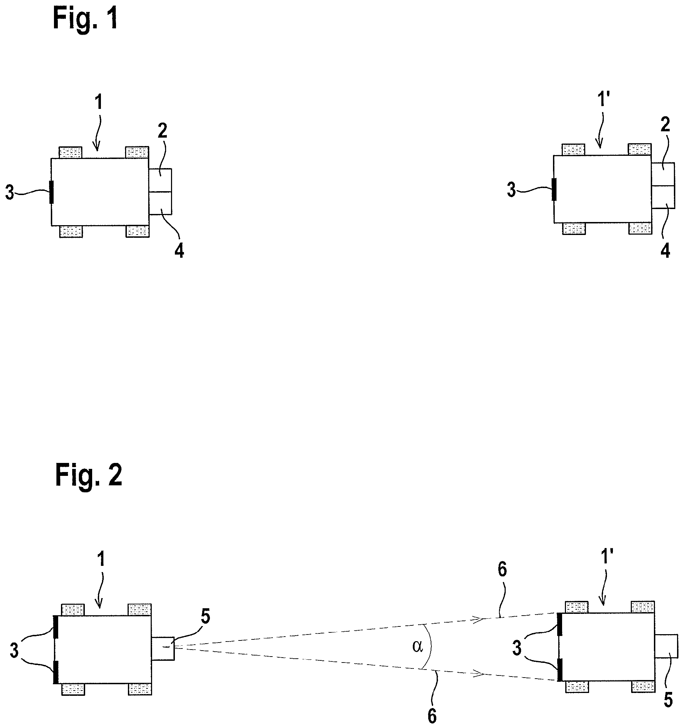

Figur 1 zeigt ein erstes Beispiel eines Sensorsystems. Dabei ist in Figur 1 ein fahrerloses Transportfahrzeug 1 und ein diesem vorausfahrendes fahrerloses Transportfahrzeug 1' dargestellt. An der Frontseite jedes fahrerlosen Transportfahrzeugs 1,1' ist ein erstes Sensormittel angeordnet, mittels dessen der Abstand zum vorausfahrenden fahrerlosen Transportfahrzeug 1' bestimmt wird. Im vorliegenden Fall ist das Sensormittel von einem Distanzsensor 2, insbesondere einem optischen Distanzsensor 2 gebildet. An beiden fahrerlosen Transportfahrzeugen 1,1' ist an der Rückseite eine Kennzeichnung 3 angebracht, mit der das fahrerlose Transportfahrzeug 1,1' identifiziert werden kann. An der Frontseite jedes fahrerlosen Transportfahrzeugs 1,1' befindet sich ein erstes Sensormittel, mit dem die Kennzeichnung 3 des jeweils vorausfahrenden fahrerlosen Transportfahrzeugs 1' erfasst werden kann. Im vorliegenden Fall ist das zweite Sensormittel von einem RFID-Lesegerät 4 gebildet, mit dem eine Kennzeichnung 3 in Form eines Transponders erfasst wird.

Das erste und zweite Sensormittel wird an eine nicht dargestellte Auswerteeinheit angeschlossen, in der die Signale der beiden Sensormittel ausgewertet werden und in Abhängigkeit hiervon Steuersignale generiert werden, mittels derer die Fahrt des jeweiligen fahrerlosen Transportfahrzeugs 1,1' gesteuert wird. Bei dem in Figur 1 dargestellten Fall ist vor dem vorausfahrenden fahrerlosen Transportfahrzeug 1' kein weiteres fahrerloses Transportfahrzeug 1 angeordnet, sodass das vorausfahrende fahrerlose Transportfahrzeug 1' ungehindert mit einer Geschwindigkeit v' fahren kann. Das hinter diesem vorausfahrenden fahrerlosen Transportfahrzeug 1' fahrende fahrerlose Transportfahrzeug 1 erkennt mittels des RFID-Lesegeräts 4 die Kennzeichnung 3 in Form des Transponders, sodass das vorausfahrende fahrerlose Transportfahrzeug 1' als Fahrzeug identifiziert ist. In Abhängigkeit der Sensorsignale des Distanzsensors 2, der den Abstand des vorausfahrenden fahrerlosen Transportfahrzeugs 1' fortlaufend erfasst, werden Steuersignale generiert, mit der das Fahrverhalten des fahrerlosen Transportfahrzeugs 1 an das vorausfahrende fahrerlose Transportfahrzeug 1' angepasst ist. Die Anpassung erfolgt derart, dass das fahrerlose Transportfahrzeug 1 ohne Kollision dem vorausfahrenden fahrerlosen Transportfahrzeug 1' folgt. Hierzu wird anhand der Steuersignale stets ein Mindestabstand des fahrerlosen Transportfahrzeugs 1 zum vorausfahrenden fahrerlosen Transportfahrzeug 1' eingehalten und die Geschwindigkeit des fahrerlosen Transportfahrzeugs 1 an die Geschwindigkeit des vorausfahrenden fahrerlosen Transportfahrzeugs 1' angepasst.

Die Anordnung gemäß Figur 1 kann natürlich auf eine größere Anzahl von fahrerlosen Transportfahrzeugen 1 erweitert sein, wobei stets anhand der Sensorsignale der Sensormittel eines fahrerlosen Transportfahrzeugs 1 deren Fahrverhalten an das jeweils vorausfahrende fahrerlose Transportfahrzeug 1' angepasst ist.

Figur 2 zeigt ein zweites Beispiel eines Sensorsystems.

In diesem Fall ist an der Frontseite eines fahrerlosen Transportfahrzeugs 1,1' nur ein Sensormittel in Form eines Flächendistanzsensors 5 angeordnet. Dieser Flächendistanzsensor 5 übernimmt sowohl die Distanzbestimmung zum vorausfahrenden fahrerlosen Transportfahrzeugs 1' als auch die Erfassung der Kennzeichnung 3 an der Rückseite des vorausfahrenden fahrerlosen Transportfahrzeugs 1', wobei an der Rückseite jedes fahrerlosen Transportfahrzeugs 1,1' in diesem Fall zwei Reflektoren als Kennzeichnung 3 vorgesehen sind. Alternativ könnten die Kennzeichnungen 3 von Kontrastmustern oder Konturmerkmalen des fahrerlosen Transportfahrzeugs 1,1' gebildet sein.

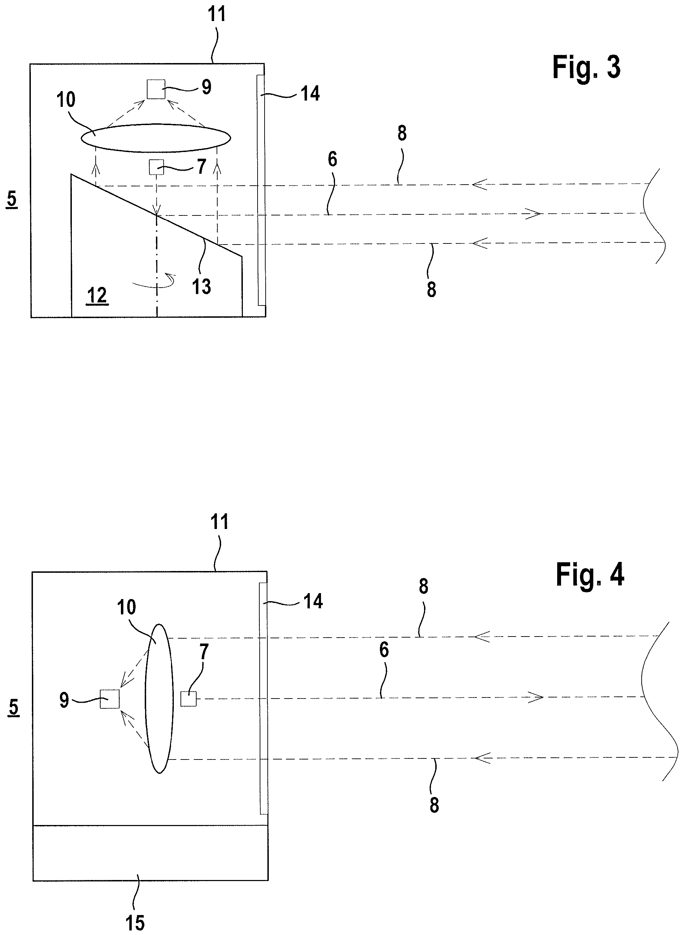

Die Flächendistanzsensoren 5 sind generell optische Sensoren, wobei die Figuren 3 und 4 zwei Ausführungsbeispiele von Flächendistanzsensoren 5 zeigen.

Der Flächendistanzsensor 5 gemäß Figur 3 ist als Scanner ausgebildet. Ein Sendelichtstrahlen 6 emittierender Sender 7 und ein Empfangslichtstrahlen 8 empfangender Empfänger 9, welchem eine Empfangsoptik 10 vorgeordnet ist, bilden einen Distanzsensor 2. Die Komponenten des Distanzsensors 2 sind stationär in einem Gehäuse 11 angeordnet. Über eine Ablenkeinheit 12, die einen um eine Drehachse drehbaren Umlenkspiegel 13 aufweist, werden die Sendelichtstrahlen 6 innerhalb eines Abtastbereichs periodisch abgelenkt und durch ein Fenster 14 aus dem Gehäuse 11 geführt, sodass mit den Sendelichtstrahlen 6 ein flächiger Überwachungsbereich erfasst wird. Die vom Objekt zurückreflektierten Empfangslichtstrahlen 8 werden über die Ablenkeinheit 12 zum Empfänger 9 geführt. In einer im Flächendistanzsensor integrierten Auswerteeinheit werden die mit dem Distanzsensor 2 ermittelten Distanzwerte abhängig von der jeweiligen Winkelstellung erfasst.

Der Flächendistanzsensor 5 gemäß Figur 4 unterscheidet sich von der Ausführungsform der Figur 3 dadurch, dass das Gehäuse 11 einen rotierenden Messkopf bildet, der drehbar auf einem Sockel 15 aufsitzt. In diesem Fall wird die Ablenkbewegung der Sendelichtstrahlen 6 dadurch erhalten, dass mit dem Messkopf der gesamte Distanzsensor 2 gedreht wird.

Mit beiden Flächendistanzsensoren 5 können die Sendelichtstrahlen 6 in einem großen Winkelbereich geführt werden, der beispielsweise 180° umfasst.

Wie Figur 2 zeigt, wird mit den in einem Teilwinkelbereich α geführten Sendelichtstrahlen 6 des Flächendistanzsensors 5 am fahrerlosen Transportfahrzeug 1 die Rückseite des vorausfahrenden fahrerlosen Transportfahrzeugs 1 erfasst. Bei dieser Ablenkbewegung werden mittels des Flächendistanzsensors 5 die Kennzeichnung 3 der vorausfahrenden fahrerlosen Transportfahrzeuge 1'erkannt und zugleich der Abstand zum vorausfahrenden fahrerlosen Transportfahrzeug 1' bestimmt. Anhand dieser Sensorsignale werden analog zur Ausführungsform gemäß Figur 1 Steuersignale generiert, mit denen das Fahrverhalten des fahrerlosen Transportfahrzeugs 1 an das vorausfahrende fahrerlose Transportfahrzeug 1' angepasst ist.

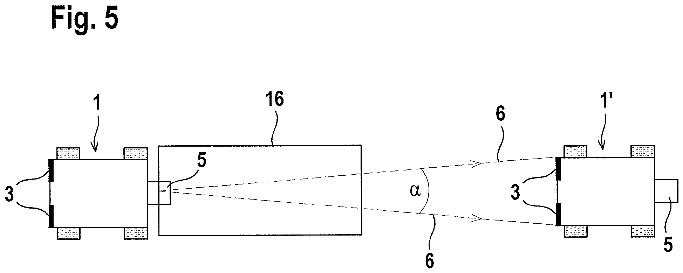

Figur 5 zeigt ein Ausführungsbeispiel des erfindungsgemäßen Sensorsystems. Bei der Ausführungsform der Figur 5 erkennt der Flächendistanzsensor 5 nicht nur die Kennzeichnung 3 des vorausfahrenden fahrerlosen Transportfahrzeugs 1' und misst den Abstand vom vorausfahrenden fahrerlosen Transportfahrzeug 1'. Vielmehr erfolgt mit dem Flächendistanzsensor 5 auch eine Überwachung eines Schutzfelds 16, dessen Kontur in der Auswerteeinheit des Flächendistanzsensors 5 abgespeichert ist.

Mit der Schutzfeldüberwachung erfüllt der Flächendistanzsensor 5 eine sicherheitsrelevante Funktion. Zur Erfüllung der Anforderungen für den Einsatz im Bereich der Sicherheitstechnik weist die Auswerteeinheit einen redundanten Aufbau auf, vorzugsweise in Form zweier sich gegenseitig überwachenden Rechnereinheiten. Wird mit dem Flächendistanzsensor 5 ein Eindringen eines sicherheitskritischen Objekts, wie zum Beispiel einer Person registriert, so generiert der Flächendistanzsensor 5 ein sicherheitsrelevantes Ausgangssignal, mit dem ein Notstopp des fahrerlosen Transportfahrzeugs 1 bewirkt wird, um Gefährdungen von Personen zu vermeiden.

### Bezugszeichenliste

- (1): fahrerloses Transportfahrzeug
- (1'): vorausfahrendes fahrerloses Transportfahrzeug
- (2): Distanzsensor
- (3): Kennzeichnung
- (4): RFID-Lesegerät
- (5): Flächendistanzsensor
- (6): Sendelichtstrahlen
- (7): Sender
- (8): Empfangslichtstrahlen
- (9): Empfänger
- (10): Empfangsoptik
- (11): Gehäuse
- (12): Ablenkeinheit
- (13): Umlenkspiegel
- (14): Fenster
- (15): Sockel
- (16): Schutzfeld

## Patentansprüche

1. Sensorsystem für eine Anordnung von fahrerlosen Transportfahrzeugen (1) wobei jedes fahrerlose Transportfahrzeug (1) an seiner Rückseite eine dieses kennzeichnende Kennzeichnung (3) aufweist, und wobei jedes fahrerlose Transportfahrzeug (1) an seiner Frontseite Sensormittel aufweist, welche ausgebildet sind, die Kennzeichnung (3) und den Abstand eines vorausfahrenden fahrerlosen Transportfahrzeugs (1') zu ermitteln, und wobei in einer Auswerteeinheit von den Sensormitteln generierte Sensorsignale ausgewertet und in Abhängigkeit hiervon Steuersignale generiert sind, mittels derer die Geschwindigkeit des fahrerlosen Transportfahrzeugs (1) gesteuert ist, **dadurch gekennzeichnet, dass** die Kennzeichnung (3) und der Abstand des vorausfahrenden fahrerlosen Transportfahrzeugs (1') mit denselben Sensormitteln erfasst sind, dass die Sensormittel von einem optischen Sensor gebildet sind, und dass der optische Sensor für eine Schutzfeldüberwachung ausgebildet ist.

2. Sensorsystem nach Anspruch 1, **dadurch gekennzeichnet, dass** die Sensormittel von einem Flächendistanzsensor (5) gebildet sind.

3. Sensorsystem nach einem der Ansprüche 1 oder 2, **dadurch gekennzeichnet, dass** die Kennzeichnung (3) von Konturmerkmalen des fahrerlosen Transportfahrzeugs (1), von Kontrastmustern oder von Reflektoren gebildet sind.

4. Sensorsystem nach einem der Ansprüche 1-3, **dadurch gekennzeichnet, dass** anhand der Steuersignale die Geschwindigkeit des fahrerlosen Transportfahrzeugs (1) an die Geschwindigkeit des vorausfahrenden fahrerlosen Transportfahrzeugs (1') angepasst ist.

5. Sensorsystem nach einem der Ansprüche 1 - 4 **dadurch gekennzeichnet, dass** mittels der Steuersignale die Einhaltung eines Mindestabstands des fahrerlosen Transportfahrzeugs (1) am vorausfahrenden fahrerlosen Transportfahrzeug (1') kontrolliert ist.

## Claims

1. Sensor system for an arrangement of driverless transport vehicles (1), wherein each driverless transport vehicle (1) has at its rear side an identifier (3) characterising this and wherein each driverless transport vehicle (1) has at its front side sensor means configured to determine the identifier (3) and the spacing of a preceding driverless transport vehicle (1'), and wherein sensor signals generated by the sensor means are evaluated in an evaluating unit and in dependence thereon control signals, by means of which the speed of the driverless transport vehicle (1) is controlled, are generated, **characterised in that** the identifier (3) and the spacing of the preceding driverless transport vehicle (1') are detected by the same sensor means, the sensor means are formed by an optical sensor and the optical sensor is configured for monitoring a protective field.

2. Sensor system according to claim 1, **characterised in that** the sensor means are formed by an area distance sensor (5).

3. Sensor system according to one of claims 1 and 2, **characterised in that** the identifier (3) is formed by contour features of the driverless transport vehicle (1), by contrast patterns or by reflectors.

4. Sensor system according to any one of claims 1 to 3, **characterised in that** the speed of the driverless transport vehicle (1) is adapted on the basis of the control signals to the speed of the preceding driverless transport vehicle (1').

5. Sensor system according to any one of claims 1 to 4, **characterised in that** maintenance of a minimum spacing of the driverless transport vehicle (1) from the preceding driverless transport vehicle (1') is controlled by means of the control signals.

## Revendications

1. Système de détection dédié à un ensemble de véhicules de transport (1) sans conducteur, chaque véhicule de transport (1) sans conducteur comportant, à sa face postérieure, un marquage distinctif (3) qui le caractérise, et chaque véhicule de transport (1) sans conducteur étant pourvu, à sa face antérieure, de moyens détecteurs conçus pour déterminer ledit marquage distinctif (3) et l'espacement d'un véhicule de transport (1') sans conducteur qui précède, sachant que des signaux de détection, engendrés par lesdits moyens détecteurs, sont évalués dans une unité d'évaluation et que des signaux de commande, au moyen desquels la vitesse du véhicule de transport (1) sans conducteur est commandée, sont engendrés en fonction desdits signaux de détection, **caractérisé par le fait que** le marquage distinctif (3), et l'espacement du véhicule de transport (1') sans conducteur qui précède, sont captés par les mêmes moyens détecteurs ; **par le fait que** lesdits moyens détecteurs sont constitués d'un capteur optique ; et **par le fait que** ledit capteur optique est réalisé en vue de la surveillance d'une zone de protection.

2. Système de détection selon la revendication 1, **caractérisé par le fait que** les moyens détecteurs sont constitués d'un capteur (5) d'espacements entre surfaces.

3. Système de détection selon l'une des revendications 1 ou 2, **caractérisé par le fait que** le marquage distinctif (3) est constitué par des caractéristiques de profil du véhicule de transport (1) sans conducteur, par des motifs contrastés ou par des réflecteurs.

4. Système de détection selon l'une des revendications 1-3, **caractérisé par le fait que** la vitesse du véhicule de transport (1) sans conducteur est adaptée, sur la base des signaux de commande, à la vitesse du véhicule de transport (1') sans conducteur qui précède.

5. Système de détection selon l'une des revendications 1-4, **caractérisé par le fait que** le maintien d'un espacement minimal du véhicule de transport (1) sans conducteur est contrôlé sur le véhicule de transport (1') sans conducteur qui précède, au moyen des signaux de commande.
